(19) **Europäisches Patentamt / European Patent Office / Office européen des brevets**

(11) **EP 2 573 131 A1**

(12) # EUROPÄISCHE PATENTANMELDUNG

(43) Veröffentlichungstag:
27.03.2013 Patentblatt 2013/13

(21) Anmeldenummer: 12180985.9

(22) Anmeldetag: 20.08.2012

(51) Int Cl.:
*C08J 9/00* (2006.01)  *C08K 7/22* (2006.01)
*C08K 7/26* (2006.01)  *C08K 9/10* (2006.01)
*F16L 59/065* (2006.01)  *B01J 3/00* (2006.01)
*B29C 44/34* (2006.01)

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 20.09.2011 DE 102011083011

(71) Anmelder: Evonik Goldschmidt GmbH
45127 Essen (DE)

(72) Erfinder:
• Eilbracht, Christian
44627 Herne (DE)
• Schiller, Carsten
40885 Ratingen (DE)
• Glos, Martin
46325 Borken (DE)
• Markowz, Georg
63755 Alzenau (DE)
• Schultz, Thorsten
64739 Hassenroth (DE)

(54) **Verbundwerkstoffe umfassend eine Polymermatrix und darin eingebettete Granulate**

(57) Gegenstand der vorliegenden Erfindung sind Verbundwerkstoffe umfassend eine Polymermatrix enthaltend ein oder mehrere Polymere und eingebettet in die Polymermatrix Granulate, die vorzugsweise nach Einbettung mindestens einen gegenüber der Umgebung abgeschlossenen Hohlraum aufweisen, in dem ein Unterdruck gegenüber dem Normaldruck von 1 bar (100 kPa) vorliegt, ein Verfahren zur Herstellung entsprechender Verbundwerkstoffe sowie der Verwendung als Dämm- und Isolationsmaterial.

EP 2 573 131 A1

**Beschreibung**

Die vorliegende Erfindung ist gerichtet auf Verbundwerkstoffe umfassend eine Polymermatrix enthaltend ein oder mehrere Polymere und eingebettet in die Polymermatrix Granulate oder Formkörper, die vorzugsweise nach Einbettung mindestens einen gegenüber der Umgebung abgeschlossenen Hohlraum aufweisen, in dem ein Unterdruck gegenüber dem Normaldruck von 1 bar (100 kPa) vorliegt, ein Verfahren zur Herstellung entsprechender Verbundwerkstoffe sowie der Verwendung als Dämm- und Isolationsmaterial.

Stand der Technik bei der Wärmedämmung sind Vakuum-Isolationspaneele (VIP), die durch Umhüllung eines porösen Kernmaterials - z.B. verdichteter pyrogener Kieselsäure (Aerosil), Fasermatten oder offenzelligen Schaumstoffen - mit einer gasdichten Folie und anschließender Evakuierung hergestellt werden. Diese Paneele ermöglichen eine ausgezeichnete Wärmedämmung (Wärmeleitfähigkeiten < $3,5*10^{-3}$ W*m$^{-1}$*K$^{-1}$, bestimmt gemäß **DIN** 52 612, bei 10 °C, sind realisierbar), die Dämmwirkung verschlechtert sich aber bei Verletzung der gasdichten Folie deutlich. Die Paneele müssen folglich mit den jeweils gewünschten Abmessungen produziert und geschützt verbaut werden (http://www.va-q-tec.com/). Außerdem haben die Folien in der Regel eine endliche Barrieredichtheit, sodass sich die Dämmwirkung auch alterungsbedingt mehr oder weniger rasch verschlechtert.

Demgegenüber sind Polyurethan-Hartschaumstoffe sehr gut verarbeitbar. Dämmplatten aus diesem Material können beliebig zugeschnitten werden oder der Schaumstoff kann direkt in dem zu füllenden Hohlraum hergestellt werden. Letzteres Verfahren ist besonders bei Kühlgeräten (Kühlschränken) üblich. Die Dämmeigenschaften sind denen einer Vakuum-Isolation jedoch deutlich unterlegen, da minimale Wärmeleitfähigkeiten von ca. $20*10^{-3}$ W*m$^{-1}$*K$^{-1}$ erreicht werden (http://www.waermedaemmstoffe.com/).

Der aktuell verstärkt in den Fokus rückende Themenkomplex Energieeffizienz und Klimaschutz hat auch bei den Herstellern von Kühlgeräten ein verstärktes Interesse an innovativen Lösungen zur signifikanten Effizienzsteigerung - insbesondere durch bessere Wärmedämmung unter Verwendung von VIP - geführt. Aktuell diskutierte Lösungen sehen den Einsatz von VIP in Kombination mit PU-Hartschaum vor, d.h. die Paneele werden in den Hohlraum zwischen Inliner und Stahlblech-Außenhaut eingebracht und dann mit PU umschäumt. Auf diese Weise kann der etablierte Produktionsprozess von Kühlschränken weitestgehend beibehalten werden (http://www.appliancedesign.com/Articles/Article_Rotation/BNP_GUID_9-5-2006_A_10000000000000893355).

Bei der Wärmedämmung von Gebäuden ist der Einsatz von VIP wesentlich problematischer, da sie nicht zugeschnitten werden können und bei Verletzung der gasdichten Außenhaut ihre Wirkung verlieren, die Dämmplatten aber in unterschiedlichen Größen und Formen benötigt werden. Außerdem bestehen im Gebäudebereich allgemein deutlich höhere Anforderungen an die Lebensdauer.

Aufgabe der vorliegenden Erfindung war deshalb die Bereitstellung eines Isolationsmaterials, welches die überragende Wärmedämmung von Vakuum-Isolationspaneelen mit den bewährt vielseitigen Verarbeitungsmöglichkeiten von Polyurethan-Schaumstoffen kombiniert.

Überraschenderweise wurde gefunden, dass eine Polymermatrix, in welche evakuierte Granulate bzw. (allgemein) Formkörper eingebettet sind, diese Aufgabe löst.

Gegenstand der vorliegenden Erfindung sind deshalb Verbundwerkstoffe umfassend eine Polymermatrix, enthaltend ein oder mehrere Polymere, und eingebettet in die Polymermatrix Granulate und/oder Formkörper, die mindestens einen gegenüber der Umgebung abgeschlossenen Hohlraum aufweisen, in dem ein Unterdruck gegenüber dem Normaldruck von 1 bar (100 kPa) vorliegt.

Ebenfalls Gegenstand der vorliegenden Erfindung ist ein Verfahren zur Herstellung eines erfindungsgemäßen Verbundwerkstoffs, bei dem ein Material zur Herstellung einer Polymermatrix mit Granulaten und/oder Formkörpern vermischt wird, die mindestens einen gegenüber der Umgebung abgeschlossenen Hohlraum aufweisen, in dem ein Unterdruck gegenüber dem Normaldruck von 1 bar (100 kPa) vorliegt, und aus dieser Mischung eine Polymermatrix erzeugt wird, in welcher die Granulate eingebettet sind.

Außerdem sind Gegenstand der vorliegenden Erfindung die Verwendung eines erfindungsgemäßen Verbundwerkstoffs oder eines erfindungsgemäß erhältlichen Verbundwerkstoffs als Isolations- und/oder Dämmmaterial sowie Gegenstände, die einen erfindungsgemäßen oder erfindungsgemäß erhältlichen Verbundwerkstoff aufweisen.

Die erfindungsgemäßen Verbundwerkstoffe haben den Vorteil, dass sie in nahezu jeder erdenklichen Form und Größe hergestellt werden können. Zudem können die erfindungsgemäßen Verbundmaterialien durch Beschneiden auf beliebige Größen und Formen gebracht werden, ohne maßgeblich ihre guten spezifischen Dämmeigenschaften zu verlieren. Die erfindungsgemäßen Verbundwerkstoffe sind damit wesentlich vielseitiger einsetzbar als die aus dem Stand der Technik bekannten Vakuum-Isolationspaneele, dämmen aber gleichzeitig besser als reine PU-Schaumisolationsmaterialien.

Die erfindungsgemäßen Verbundwerkstoffe haben außerdem den Vorteil, dass sie eine Wärmeleitfähigkeit (bestimmt gemäß DIN 52 612, bei 10 °C) von kleiner $18*10^{-3}$ W*m$^{-1}$*K$^{-1}$ aufweisen.

Die erfindungsgemäßen Verbundwerkstoffe, das Verfahren zu ihrer Herstellung sowie deren Verwendungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Wenn im nachfolgenden Mittelwerte angegeben sind, so handelt es sich, wenn nicht anders angegeben, um das Zahlenmittel. Wenn im nachfolgenden Angaben in Prozent angegeben sind, so handelt es sich, wenn nicht anders angegeben, um Massen-%.

Die erfindungsgemäßen Verbundwerkstoffe zeichnen sich dadurch aus, dass sie eine Polymermatrix, enthaltend ein oder mehrere Polymere, und eingebettet in die Polymermatrix Granulate bzw. Formkörper, die mindestens einen gegenüber der Umgebung abgeschlossenen Hohlraum aufweisen, in dem ein Unterdruck gegenüber dem Normaldruck von 1 bar (100 kPa) vorliegt, umfassen. Der Unterdruck beträgt vorzugsweise kleiner 500 mbar, vorzugsweise von 0,001 bis 200 mbar, besonders bevorzugt von 0,1 bis 100 mbar. Der Massen-Anteil der Granulate an dem Verbundwerkstoff beträgt vorzugsweise 20 bis 99 Massen-%, bevorzugt 50 bis 90 Massen-%. Die Granulate bzw. Formkörper können im Wesentlichen aus einem oder mehreren organischen und/oder aus einem oder mehreren anorganischen Materialien bestehen. Der Ausdruck im Wesentlichen soll dabei einen Massen-%-Anteil von mindestens 70 %, bevorzugt mindestens 90 % bezogen auf die Gesamtmasse des Granulats bedeuten. Vorzugsweise bestehen die Granulate im Wesentlichen aus anorganischen Materialien, insbesondere aus Sauerstoff enthaltenden Verbindungen oder Salzen der Metalle oder Halbmetalle. Bevorzugte Sauerstoff enthaltende Verbindungen sind Aluminiumoxide oder Alumosilkate oder Siliziumdioxide bzw. Kieselsäuren, insbesondere pyrogene oder gefällte Kieselsäuren. Ganz besonders bevorzugte Granulate bestehen im Wesentlichen aus kompaktierten Pulvern aus pyrogener Kieselsäure und/oder, vorzugsweise oder Fällungskieselsäure. Daneben können verschiedene Trübungsmittel wie beispielsweise SiC, Carbon Black, Graphit, Eisenoxide oder $TiO_2$ allein oder in Kombination mit Anteilen von bevorzugt 1 bis 30 Massen-%, besonders bevorzugt 5 bis 10 Massen-% (bezogen auf die Granulat- bzw. Pulvermasse) enthalten sein. Durch das Vorhandensein von Trübungsmittel kann ggf. eine Reduzierung der Strahlungs-Wärmeleitung erreicht werden. Des Weiteren können die Granulate bzw. Formkörper Fasern zur mechanischen Stabilisierung, beispielsweise Glas-, Keramik- oder Polymerfasern, sowie Hilfsstoffe aus dem Granulierungsverfahren, beispielsweise Binder, enthalten.

Die Granulate weisen vorzugsweise eine mittlere Korngröße $d_{50}$ von 50 $\mu$m bis 100 mm, bevorzugt von 100 $\mu$m bis 50 mm und besonders bevorzugt von 0,5 mm bis 20 mm auf (ermittelt nach DIN 66165-2). Zur Erlangung eines möglichst hohen Füllgrads und/oder zur Verbesserung der Verarbeitung kann es sinnvoll sein, gezielte Verteilungen der Korngrößenverteilung, wie bspw. bi- oder trimodale Verteilungen, zu verwenden. Alternativ zu Granulaten mit einer vom Granulierungsverfahren abhängigen Größenverteilung und Form der Granulat-Körner können auch Formkörper mit definierter Geometrie verwendet werden, beispielsweise Kugeln oder Quader. Hierbei gelten für die bevorzugten Abmessungen in die drei Raumrichtungen entsprechende Bereiche wie für die mittlere Korngröße der Granulate.

Erfindungswesentlich ist, dass die einzelnen Körner des Granulates bzw. Formkörper jeweils mindestens einen Hohlraum aufweisen. Morphologisch betrachtet kann es sich dabei um einen einzigen vom Feststoff umschlossenen Hohlraum handeln, wie beispielsweise bei einer Hohlkugel, um mehrere isolierte geschlossene Poren oder aber um ein Netzwerk aus offenen Poren bzw. Kanälen. Bevorzugt bestehen die Granulat-Körner bzw. Formkörper im Wesentlichen aus verdichteten Pulvern, so dass zwischen den einzelnen Primärpartikeln ein offenes Porensystem bestehen bleibt. Besonders bevorzugt werden sehr feinteilige bis nano-strukturierte Pulver eingesetzt, so dass entsprechend fein strukturierte Porensysteme entstehen. Bevorzugte Pulver bzw. eingesetzt Materialien weisen eine BET-Oberfläche von größer 5 m$^2$/g, besonders bevorzugt von 50 m$^2$/g bis 1000 m$^2$/g (nach ISO 9277) auf.

Die in der Polymermatrix vorhandenen Granulate weisen vorzugsweise eine Porosität $\Phi$, d.h. ein Verhältnis vom Volumen des abgeschlossenen Hohlraums zum Gesamtvolumen des Granulatkorns, von 50% bis 99,9%, bevorzugt von 75% bis 99% auf. Das Gesamtvolumen des Granulats bzw. eines Granulatkorns oder Formkörpers mit abgeschlossenem Hohlraum kann durch Bestimmung des verdrängten Volumens einer geeigneten Flüssigkeit, z.B. Wasser oder Ethanol bestimmt werden. Das Volumen der abgeschlossenen Hohlräume kann dadurch bestimmt werden, dass vom Gesamtvolumen das Volumen des Feststoffes des Granulats abgezogen wird. Das Volumen des Feststoffs kann bei bekannter Dichte des Materials des Feststoffes einfach aus der bestimmten Masse errechnet werden oder aber die Granulate, von denen das Gesamtvolumen bestimmt wurde, werden bis zu einer mittleren Korngröße $d_{50}$ von 20 $\mu$m gemahlen oder gemörsert und von dem so erhaltenen Pulver wird das Volumen bzw. die Dichte bestimmt.

Der bzw. die in den Granulatkörnern bzw. Formkörpern vorhandene(n) Hohlraum/Hohlräume können durch eine gasundurchlässige Barriere aus einem geeigneten Material gegenüber der Umgebung abgeschlossen sein. Bei Granulatkörnern bzw. Formkörpern mit geschlossener Porosität übernimmt in der Regel das Material des Granulatkorns selbst diese Barriere-Funktion. Bei Granulaten bzw. Formkörpern mit offener Porosität erfolgt vorteilhaft eine Verkapselung jedes einzelnen Korns durch Umhüllung mit einem geeigneten Material, welches sich vom Basismaterial des Granulates oder Formkörpers unterscheiden kann. Das Material kann z.B. ausgewählt sein aus Kunststoffen, Metallen, Gläsern oder einer Kombination aus diesen Stoffen. Um den Unterdruck im Hohlraum bzw. Porensystem möglichst lange aufrecht zu erhalten kann es vorteilhaft sein, wenn die Barriere aus Metall oder einer glasartigen Verbindung, vorzugsweise Glas oder einem Kunststoff-Metall-Verbund aufgebaut ist. Besonders bevorzugt sind die Hohlräume durch eine Barriere aus Glas, insbesondere Silikatglas oder durch einen Kunststoff-Metall-Verbund, bevorzugt metallisierte Kunststoff-Folie, gegenüber der Umgebung abgeschlossen.

Die in den Hohlräumen/Poren eingeschlossene Gasatmosphäre weist einen Unterdruck gegenüber dem Normaldruck von 1 bar (100 kPa) auf. Der Unterdruck beträgt vorzugsweise kleiner 500 mbar, vorzugsweise von 0,001 bis 200 mbar, besonders bevorzugt von 0,1 bis 100 mbar. Die Bestimmung des Gasdrucks kann durch folgende Methode erfolgen: eine vermessene Menge an Granulatkörnern mit dem Gesamtvolumen $V_{Granulat}$ wird in einem definierten, gasdichten Raum mit dem Leervolumen $V_{Prüfkammer}$ zerstört. Anhand der Änderung des Gasdrucks in diesem Raum von $P_0$ vor Zerstörung der Granulatkörner auf $P_1$ nach Zerstörung der Granulatkörner lässt sich der vorher in den Poren der Granulate herrschende Druck $P_{Pore}$ nach der Gleichung

$$P_{Pore} = [ P_1 ( V_{Prüfkammer} - V_{Granulat} (1 - \Phi)) - P_0 (V_{Prüfkammer} - V_{Granulat} ) ] / [ V_{Granulat} \, \Phi ]$$

ermitteln. Eine Alternative wäre, die Partikeln unter Wasser (oder in einer anderen, die Partikel sehr gut benetzenden Flüssigkeit) zu zerstören und das freigesetzte Gasvolumen aufzufangen.

Die Zusammensetzung der Gasatmosphäre kann beliebig beschaffen sein. Bevorzugt wird eine Gasatmosphäre eingesetzt, deren Zusammensetzung von Luft verschieden ist. Vorzugsweise wird die Gaszusammensetzung gezielt eingestellt und so gewählt, dass eine niedrige Wärmeleitfähigkeit erreicht wird. Dabei sind vorzugsweise zwei verschiedene Parameter zu beachten: zum einen die Gasphasenwärmeleitfähigkeit der Gaszusammensetzung und zum anderen die freie Weglänge der Gasmoleküle. Bevorzugte Gase mit niedriger Gasphasenwärmeleitfähigkeit sind die typischen Treibgase wie beispielsweise $CO_2$, Kohlenwasserstoffe mit 3 bis 5 Kohlenstoff-Atomen, bevorzugt cyclo-, iso- und n-Pentan, Fluorkohlenwasserstoffe (gesättigt sowie ungesättigt), bevorzugt HFC 245fa, HFC 134a und HFC 365mfc, Fluorchlorkohlenwasserstoffe (gesättigt sowie ungesättigt), bevorzugt HCFC 141 b, Sauerstoff-haltige Verbindungen wie Methylformiat und Dimethoxymethan, oder Chlorkohlenwasserstoffe, bevorzugt 1,2-Dichlorethan. Bei fein strukturierten Porensystemen und niedrigen Gasdrücken kann die Gasphasenwärmeleitfähigkeit jedoch unter den für die Gaszusammensetzung zu erwartenden Wert absinken. Diesen Effekt nennt man Knudsen-Effekt. Er tritt auf, wenn die freie Weglänge der Gasmoleküle größer ist als der Durchmesser der Poren, in denen sich das Gas befindet. Stöße der Gasmoleküle mit der Porenwandung werden dann wahrscheinlicher als Stöße der Gasmoleküle untereinander. Dies kann soweit gehen, dass Stöße der Gasmoleküle untereinander vollständig unterdrückt werden. Ohne Stöße findet keine Übertragung der Wärmeenergie statt und die Gasphasenwärmeleitung wird ausgeschaltet. Im Gegensatz zur Wärmeleitfähigkeit steigt die freie Weglänge mit sinkender Molmasse der Gasmoleküle. Es kann daher vorteilhaft sein, ein Gas mit kleiner Molmasse, beispielsweise Wasserstoff, Helium, Methan, Ammoniak, Wasser oder Neon, als Isolationsgas in den Poren der Granulat-Körner bzw. Formkörper einzusetzen, falls der Knudsen-Effekt die eigentlich hohe Wärmeleitfähigkeit dieser Gase überkompensiert.

Die Polymermatrix, in die die Granulat-Körner bzw. die Formkörper eingebettet sind, kann ungeschäumt oder geschäumt sein. Vorzugsweise ist die Polymermatrix eine Polymerschaummatrix. Dies hat den Vorteil, dass die Dämmleistung gegenüber ungeschäumten Polymeren nochmals erhöht werden kann und dass, je nach verwendetem Polymermaterial bzw. eingesetzten Additiven die geschäumte Polymermatrix flexibler sein kann als eine ungeschäumte Polymermatrix desselben Polymermaterials. Handelt **es sich bei der Polymermatrix um eine** Polymerschaummatrix, kann dieser Polymerschaum offen- oder geschlossenzellig ausgeführt sein. Vorzugsweise ist die Polymerschaummatrix eine geschlossenzellige Polymerschaummatrix.

Die Polymermatrix kann alle bekannten Polymere einzeln oder in Mischungen enthalten. Vorzugsweise enthält die Polymermatrix verschäumbare Polymere. Besonders bevorzugte Polymere, die in der Polymermatrix enthalten sein können, sind z.B. ausgewählt aus Polystyrol (PS), Polyurethan (PU), Polymethylmethacrylat (PMMA). Besonders bevorzugt als Polymermatrix sind solche, die PUR- oder PIR-Hartschaumstoffe enthalten. Zur Herstellung einer Polymerschaummatrix können gängige Herstellungsverfahren, wie z. B. RIM-Verfahren (reaction injection moulding) oder Extrusions-Verfahren, eingesetzt werden.

Wie schon beim Granulat genannt, kann auch die Polymermatrix ein Trübungsmittel enthalten. Ein solches Trübungsmittel kann wiederum z.B. ausgewählt sein aus Ruß (Carbon Black), $TiO_2$, Graphit oder SiC, wobei sich Art und Anteil des Trübungsmittels in der Polymermatrix von dem im Granulat unterscheiden können. Der Anteil an Trübungsmittel beträgt bezogen auf die Gesamtmasse der Polymermatrix vorzugsweise 0,5 bis 30 Massen-%, bevorzugt 1 bis 10 Massen-%.

Die in den Poren einer geschäumten Polymermatrix enthaltene Gasphase kann sich in Zusammensetzung und Druck von der von der Gasphase in den Hohlräumen bzw. Poren der Granulatkörner bzw. Formkörper unterscheiden. Das Zellgas in der Polymermatrix wird im Wesentlichen durch die eingesetzten Treibmittel bestimmt. Dies können physikalische wie auch chemische Treibmittel sein. Bevorzugt sind Treibmittel, deren Gasphasen-Wärmeleitfähigkeit niedriger als die der Luft ist. Geeignete physikalische Treibmittel im Sinne dieser Erfindung sind Gase, beispielsweise verflüssigtes $CO_2$, und leichtflüchtige Flüssigkeiten, beispielsweise Kohlenwasserstoffe mit 3 bis 5 Kohlenstoff-Atomen, bevorzugt cyclo-, iso- und n-Pentan, Fluorkohlenwasserstoffe (gesättigt sowie ungesättigt), bevorzugt HFC 245fa, HFC 134a und HFC 365mfc, Fluorchlorkohlenwasserstoffe (gesättigt sowie ungesättigt), bevorzugt HCFC 141 b, Sauerstoff-haltige Verbindungen wie Methylformiat und Dimethoxymethan, oder Chlorkohlenwasserstoffe, bevorzugt 1,2-Dichlorethan.

Die erfindungsgemäßen Verbundwerkstoffe können auf verschiedene Weise hergestellt werden. Bevorzugte erfindungsgemäße Verbundwerkstoffe sind solche, die durch das erfindungsgemäße Verfahren erhältlich sind, welches nachfolgend beschrieben wird.

Das erfindungsgemäße Verfahren zur Herstellung eines erfindungsgemäßen Verbundwerkstoffs zeichnet sich dadurch aus, dass ein Material zur Herstellung einer Polymermatrix mit Granulaten oder Formkörpern vermischt wird, die mindestens einen gegenüber der Umgebung abgeschlossenen Hohlraum aufweisen, in dem ein Unterdruck gegenüber dem Normaldruck von 1 bar (100 kPa) vorliegt, und aus dieser Mischung eine Polymermatrix erzeugt wird, in welcher die Granulate bzw. Formkörper eingebettet sind.

Die eingesetzten Granulate oder Formkörper werden bevorzugt aus pulverförmigen Vorstufen mit zuvor beschriebener Zusammensetzung und Eigenschaften hergestellt. Dazu können alle gängigen Granulierungs- und Tablettierungsverfahren, wie z. B. Wirbelschichtgranulation, Kompaktierung und ggf. Brechen oder Niederdruck-Extrusion ggf. unter Verwendung von Flüssigkeiten zur Dispergierung und/oder zusätzlichen Bindern verwendet werden. Derart erhältliche Granulate bzw. Formkörper weisen häufig eine offene Porosität auf. Um in dem Porensystem den erfindungswesentlichen Unterdruck zu erzeugen, werden die Granulate/Formkörper vorzugsweise einem äußeren Unterdruck und/oder einer erhöhten Temperatur ausgesetzt und unter diesen Bedingungen mit einer gasundurchlässigen Barriereschicht ausgerüstet. Bei einer Verkapselung bei oder unter Raumtemperatur beträgt der Druck (Unterdruck), bei dem die Ausrüstung mit der Barriereschicht erfolgt, vorzugsweise kleiner 500 mbar, bevorzugt von 0,001 bis 200 mbar. Werden beim Aufbringen der Barriereschicht erhöhte Temperaturen angewendet, dann braucht der Druck nicht so weit abgesenkt werden, da sich beim Abkühlen der verkapselten Granulate der Innendruck weiter reduziert.

Zur Herstellung der Barriereschicht können die oben für die Barriereschicht genannten Materialien eingesetzt werden. Vorzugsweise werden die Hohlräume durch eine Barriere aus Glas gegenüber der Umgebung abgeschlossen. Die Herstellung erfolgt vorzugsweise durch oberflächliches Aufschmelzen des Granulatmaterials oder zusätzlicher Additive im Randbereich der Granulate. Alternativ kann auf die Oberfläche der offenporigen porösen Granulate eine Schmelze des Barrierematerials aufgebracht werden, die anschließend zum Erstarren gebracht wird. Das Aufbringen kann z.B. durch Besprühen/Berakeln der Granulate mit der Schmelze oder durch Eintauchen der Granulate in die Schmelze erfolgen. Das Erstarren der Schmelze kann durch einfaches Abkühlen auf Raumtemperatur erfolgen.

Ein weiteres Verfahren zur Verkapselung der Granulatkörner ist die chemisch-reaktive Versiegelung, z.B. durch Silane oder unter Vernetzung aushärtende Polymere. Dazu können die Granulatkörner in eine flüssige Zubereitung des Kapselmaterials eingetaucht, damit übergossen oder besprüht oder anderweitig oberflächlich benetzt werden. Alternativ zu einem chemisch reaktiven Verkapselungsmaterial kann auch eine Schmelze eines thermoplastischen Polymers verwendet werden.

Ein drittes Verfahren wäre das Umhüllen der Granulatkörner mit einer gasdichten Folie. Hierzu werden bevorzugt mehrlagige Polymerfolien verwendet, welche eine dünne Metallschicht als Diffusionssperre enthalten. Zum Verschließen der Folienkapsel kann diese verklebt oder verschweißt werden. Es kann vorteilhaft sein, Kombinationen aus den zuvor genannten Verkapselungs-Verfahren in zwei- oder mehrstufigen Schritten anzuwenden.

Eine Verkapselung der Granulate ist jedoch nicht unbedingt erforderlich. Der erfindungswesentliche Unterdruck in den Hohlräumen der Granulatkörner kann auch dadurch gewahrt werden, dass der gesamte Prozess der Einbettung der Granulate in eine Polymermatrix unter vermindertem Druck durchgeführt wird - vorausgesetzt, die äußere Polymermatrix bildet selbst eine ausreichend gasdichte Barriere, so dass der Unterdruck in den Granulaten bestehen bleibt, wenn das Kompositmaterial nach der Herstellung dem normalen äußeren Luftdruck ausgesetzt wird. Eine weitere Variante dieser Ausführungsform ist es, den Unterdruck in den Hohlräumen der Granulatkörner durch chemische Reaktionen oder Getter-Substanzen zu erzeugen. Die Einbettung kann dann bei Normaldruck erfolgen, der Innendruck in den Hohlräumen der Granulatkörner erniedrigt sich nach deren Einbettung aber durch chemische Reaktionen oder Absorption der Gasmoleküle. Beispielsweise kann den Granulaten Calciumoxid beigemischt werden, die Gasphase in den Hohlräumen gegen Kohlendioxid ausgetauscht werden und die Granulate sofort in die Polymermatrix eingebettet werden. Der Gasdruck in den Hohlräumen erniedrigt sich in den folgenden Tagen von selbst durch Reaktion der Calciumoxids mit dem Kohlendioxid zu Calciumcarbonat.

Als Material zur Herstellung der Polymermatrix kann ein Polymer oder eine Mischung von Polymeren oder die Edukte zur Erzeugung des/der Polymeren verwendet werden. Die Menge an einzusetzenden Granulaten/Formkörpern und einzusetzendem Polymeren bzw. deren Ausgangsstoffen wird vorzugsweise so gewählt, dass der erhaltene Verbundwerkstoff den oben als bevorzugt angegebenen Massenanteil an Granulaten/Formkörpern aufweist.

Es kann vorteilhaft sein, wenn das erfindungsgemäße Verfahren zumindest einen Verfahrensschritt enthalten ist, bei dem das Material zur Herstellung der Polymermatrix oder ein Teil davon sich zumindest teilweise im flüssigen Aggregatzustand befindet und diese flüssige Phase mit den Granulaten vermischt wird. Um den Mischvorgang von Polymer und Granulat bzw. Formkörpern zu erleichtern, kann es vorteilhaft sein, wenn das Polymer durch Lösen in einem geeigneten Lösungsmittel oder durch Aufschmelzen in einen flüssigen bzw. fließfähigen Zustand überführt wird. Nach dem Mischvorgang wird die Polymermatrix durch Abkühlen unter die Schmelztemperatur bzw. durch Entfernen des Lösungsmittels verfestigt. Alternativ kann der Mischungsvorgang mit dem Granulat auch auf Stufe der Ausgangsverbindungen zur Erzeugung der Polymermatrix erfolgen, d.h. mit den Monomeren oder prä-polymeren Verbindungen. Die Polymermatrix entsteht dann direkt im Verbundmaterial durch eine Polymerisations- bzw. Vernetzungsreaktion. Diese Variante ist bevorzugt, wenn die Polymermatrix zur Gruppe der Duromere zählt. In einer weiteren Ausführungsform des erfindungsgemäßen Verfahrens wird das Granulat bzw. die Formkörper mit einem ebenfalls granulierten Polymer vermischt. Die Verbindung zum Verbundmaterial erfolgt dann üblicherweise durch Erwärmen, wobei das Polymer schmilzt oder zumindest erweicht und das Granulat verklebt.

Es kann vorteilhaft sein, wenn das erfindungsgemäße Verfahren einen Verfahrensschritt der Verschäumung enthält. Das Verschäumen kann mechanisch/physikalisch oder chemisch erfolgen. Beim mechanischen/physikalischen Verschäumen wird Luft oder Gas bzw. ein Gasgemisch gasförmig in eine viskose Polymermasse eingetragen und diese viskose Polymermasse anschließend gehärtet, so dass die eingetragene Luft bzw. das eingetragene Gas / Gasgemisch in Blasen in der Polymermasse eingeschlossen ist. Es können Polymerschäume auch dadurch physikalisch erzeugt werden, dass eine Polymermasse mit einem oder mehreren Treibmitteln versetzt wird, die bei Erwärmen ihren Aggregatzustand von flüssig oder fest in gasförmig ändern und so ebenfalls zur Schaumbildung führen. Geeignete und bekannte Treibmittel sind z.B. bei Raumtemperatur flüssige Kohlenwasserstoffe, wie z.B. Pentane. Sind in der erfindungsgemäßen Zusammensetzung zusätzliche Treibmittel vorhanden, können diese physikalische oder chemische Treibmittel sein. Geeignete physikalische Treibmittel im Sinne dieser Erfindung sind Gase, beispielsweise verflüssigtes $CO_2$, und leicht-flüchtige Flüssigkeiten, beispielsweise Kohlenwasserstoffe mit 3 bis 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141 b, Sauerstoff-haltige Verbindungen wie Methylformiat und Dimethoxymethan, oder Chlorkohlenwasserstoffe, bevorzugt 1,2-Dichlorethan. Eine chemische Erzeugung von Schaum ist z.B. dadurch möglich, dass bei der Polymerisation Verbindungen entstehen, die bei den Polymerisationstemperaturen gasförmig sind. Ein typisches chemisches Treibmittel ist z. B. Wasser, welches bei Polymerisationsreaktionen entsteht, die auf einer Kondensationsreaktion basieren. Neben Wasser können auch andere chemische Treibmittel eingesetzt werden. Bei der Herstellung von Polyurethanschäumen z.B. solche, die mit den eingesetzten Isocyanaten unter Gasentwicklung reagieren, wie beispielsweise Wasser oder Ameisensäure.

Am Beispiel eines Verbundmaterials mit geschäumter Polyurethan-Matrix sollen verschiedene Varianten des erfindungsgemäßen Verfahrens näher diskutiert werden. Geschäumtes Polyurethan ist in der Regel ein hochvernetztes, weder in gängigen Lösemitteln wie Wasser, Ethanol oder Aceton lösliches noch schmelzbares (ohne Zersetzung) Duromer. Die Mischung mit dem Granulat erfolgt daher vorzugsweise bereits auf Stufe von monomeren bzw. prä-polymeren Verbindungen. Ein Polyurethan-System zur Herstellung von Isolierschaumstoffen weist in der Regel zwei Komponenten (A) und (B) auf, wobei die eine Komponente aus Verbindungen mit reaktionsfähigen Wasserstoffatomen zusammengesetzt ist, die sogenannte Polyol-Komponente (A), und die zweite Komponente (B) ein oder mehrere Isocyanate aufweist. Übliche Hilfs- und Zusatzstoffe können in die Polyol-Komponente (A) einformuliert oder separat zudosiert werden. Die Granulate bzw. Formkörper werden bevorzugt mit der Polyol-Komponente, der Isocyanat-Komponente oder - besonders bevorzugt - mit einer frischen Reaktionsmischung aus diesen Komponenten vermischt. Die beiden erstgenannten Fälle eignen sich nur für niedrige Füllgrade und kleine Korndurchmesser der Granulate, da die Granulate bzw. Formkörper in der Komponente (A) oder (B) vordispergiert werden müssen und diese Dispersion anschließend mit der zweiten Komponente innig vermischt werden muss. Der bevorzugte Fall einer Einarbeitung der Granulate/Formkörper in eine frische Reaktionsmischung aus (A)- und (B)-Komponente erlaubt die problemlose Verarbeitung großer Korndurchmesser. Das Einarbeiten von Granulat/Formkörpern in der Reaktionsmischung kann dabei vor dem Überführen in die Form erfolgen oder aber Granulat/Formkörper werden als Packung bzw. Schüttung in einer Hohlform vorgelegt und diese mit der flüssigen, aufschäumenden Reaktionsmischung infiltriert bzw. die Körner umschäumt. Zur Herstellung von Dämmplatten ist auch ein kontinuierliches Verfahren analog der Produktion von Polyurethan-Dämmplatten nach dem Doppel-Transportband-Verfahren vorstellbar. Die Granulate/Formkörper können dabei entweder vor oder nach dem Auftrag der Polyurethan-Reaktionsmischung auf die untere Deckschicht gestreut werden, wobei die einzelnen Körner umschäumt werden. Die Aushärtung des Kompositmaterials erfolgt dann durch die Polyaddtitionsreaktion unter Vernetzung zum Polyurethan.

Die typische Zusammensetzung eines Polyurethan-Systems wird im Folgenden näher beschrieben:

Als Polyolkomponenten (A) können die für die Formulierung von Isolierschaumstoffen üblichen Verbindungen verwendet werden, beispielsweise Polyetherpolyole und Polyesterpolyole. Polyetherpolyole können durch Umsetzung von mehrwertigen Alkoholen oder Aminen mit Alkylenoxiden gewonnen werden. Polyesterpolyole basieren vorzugsweise auf Estern mehrwertiger Carbonsäuren (meist Phthalsäure oder Terephthalsäure) mit mehrwertigen Alkoholen (meist Glycolen).

Als (Poly-)Isocyanatkomponente (B) können die für die Formulierung von Isolierschaumstoffen üblichen Verbindungen verwendet werden, beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten analogen mit einer mittleren Funktionalität von 2 bis 4.

Ein geeignetes Verhältnis von Isocyanat und Polyol, ausgedückt als Index der Formulierung, liegt im Bereich von 50-500, bevorzugt 100-350. Der Index beschreibt dabei das Verhältnis von tatsächlich eingesetztem Isocyanat zu (für eine stöchiometrische Umsetzung mit Polyol) berechnetem Isocyanat. Ein Index von 100 steht für ein molares Verhältnis der reaktiven Gruppen von 1 zu 1.

Als Hilfs- und Zusatzstoffe können die für die Formulierung von Isolierschaumstoffen üblichen Verbindungen verwendet werden, darunter Katalysatoren, Zellstabilisatoren, Treibmittel, Flammschutzmittel, Füllstoffe, Farbstoffe und Lichtschutzmittel. Geeignete Katalysatoren im Sinne dieser Erfindung sind z. B. Substanzen die die Gelreaktion (Isocyanat-Polyol), die Treibreaktion (Isocyanat-Wasser) oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin , **Dimethylaminoethanol**, Dimethylaminoethoxyethanol und Bis(dimethylaminoethyl)ether, Zinnverbindungen wie Dibutylzinndilaurat und Kaliumsalze wie Kaliumacetat und Kalium-2-ethylhexanoat. Geeignete Einsatzmengen richten sich nach dem Typ des Katalysators und liegen üblicherweise im Bereich von 0,05 bis 5 Gewichtsteilen, bzw. 0,1 bis 10 Gewichtsteilen für Kaliumsalze, bezogen auf 100 Gewichtsteile Polyol.

Geeignete Zellstabilisatoren sind z. B. oberflächenaktive Substanzen wie beispielsweise organische Tenside oder bevorzugt Silicon-Tenside (Polyether-Polydimethylsiloxan-Copolymere). Typische Einsatzmengen an Polyethersiloxan-Zellstabilisatoren liegen bei 0,5 bis 5 Gewichtsteile pro 100 Gewichtsteile Polyol, bevorzugt bei 1 bis 3 Gewichtsteile pro 100 Gewichtsteile Polyol.

Der schäumbaren Formulierung kann Wasser als chemisches Treibmittel zugesetzt werden, da es mit Isocyanaten unter Entwicklung von Kohlendioxid-Gas reagiert. Geeignete Wasser-Gehalte im Sinne dieser Erfindung hängen davon ab, ob zusätzlich zum Wasser noch physikalische Treibmittel eingesetzt werden oder nicht. Bei rein Wasser-getriebenen Schäumen liegen die Werte für den Wassergehalt vorzugsweise bei 1 bis 20 Gewichtsteilen pro 100 Gewichtsteile Polyol, werden zusätzlich andere Treibmittel eingesetzt oder erfolgt die Verschäumung unter vermindertem Druck, verringert sich die Einsatzmenge vorzugsweise auf von 0,1 bis 5 Gewichtsteile Wasser pro 100 Gewichtsteile Polyol. Geeignete physikalische Treibmittel wurden bereits genannt.

Isolationsschaumstoffe für die Wärmedämmung von Gebäuden unterliegen Brandschutzanforderungen und müssen vorzugsweise flammhemmend ausgerüstet werden. Prinzipiell sind alle gebräuchlichen Flammschutzmittel geeignet. Vorzugsweise werden als Flammschutzmittel bevorzugt flüssige organische Phosphor-Verbindungen, wie halogenfreie organische Phosphate, z.B. Triethylphosphat (TEP), halogenierte Phosphate, z.B. Tris(1-chlor-2-propyl) phosphat (TCPP) und Tris(2-chlorethyl)phosphat (TCEP) oder organische Phosphonate, z.B. Dimethylmethanphosphonat (DMMP), Dimethylpropanphosphonat (DMPP) oder Feststoffe wie Ammoniumpolyphosphat (APP) oder roter Phosphor eingesetzt. Desweiteren sind als Flammschutzmittel halogenierte Verbindungen, beispielsweise halogenierte Polyole, sowie Feststoffe wie Blähgraphit und Melamin geeignet.

Eine typische Polyurethan- bzw. Polyisocyanurat-Isolierschaumformulierung im Sinne dieser Erfindung würde ein Raumgewicht von 5 bis 50 kg/m$^3$ ergeben und hätte die folgende Zusammensetzung:

| Komponente | Gewichtsanteil |
|---|---|
| Polyol | 100 |
| (Amin-)Katalysator | 0,05 bis 5 |
| Kalium-Trimerisierungskatalysator | 0 bis 10 |
| Polyethersiloxan | 0,5 bis 5 |
| Wasser | 0,1 bis 20 |
| Treibmittel | 40 |
| Flammschutzmittel | 0 bis 50 |
| Isocyanat-Index: 50-500 | |

Die Verarbeitung der erfindungsgemäßen Formulierungen zu Hartschaumstoffen kann nach allen dem Fachmann geläufigen Verfahren erfolgen, beispielsweise im **Handmischverfahren oder bevorzugt mit Hilfe von Hochdruck-**Verschäumungsmaschinen.

Alternativ zur Umschäumung von verkapselten Granulaten können auch unverkapselte Granulate verwendet werden, wobei dann der gesamte Umschäumungs-Prozess mit einem geschlossenzelligen Hartschaum unter vermindertem Druck erfolgt. Dazu werden die Granulate in einer gasdicht verschlossenen Hohlform vorgelegt, an die einerseits eine Vakuum-Pumpe und andererseits der Mischkopf einer Hochdruck-Verschäumungsmaschine angeschlossen sind. Nachdem die Hohlform auf den gewünschten Druck evakuiert wurde, wird mit der Verschäumungsmaschine die flüssige Polyurethan-Reaktionsmischung in die Form eingespritzt. Die Reaktionsmischung fließt in die Hohlräume zwischen den Granulatkörnern, beginnt aufzuschäumen und der expandierende Schaum hüllt die Granulatkörner ein. Nach Aushärtung des Polyurethanschaumes entsteht so ein Kompositmaterial, bei dem nicht nur in den Hohlräumen der Granulate sondern auch in den Schaumzellen ein Unterdruck herrscht. Die mechanische Festigkeit des Schaumstoffes sollte daher hoch genug sein, um der Druckdifferenz (zwischen Innendruck und dem äußeren Luftdruck) ohne Schrumpferscheinungen standzuhalten. Dazu wird in der Regel eine höhere Dichte des Schaumstoffes erforderlich sein, als sie für Polyurethan-Isolierschäume üblich ist. Der Druck bei der Umschäumung der Granulate beträgt bevorzugt kleiner 200 mbar, besonders bevorzugt kleiner 100 mbar - die Druckdifferenz zum Normaldruck also mindestens 0,8 bar und besonders bevorzugt 0,9 bar oder mehr.

Weiterhin ist eine Anpassung von Treibmitteltyp und -Menge auf die Verschäumung im Unterdruck notwendig. Neben dieser diskontinuierlichen Formverschäumung sind auch kontinuierliche Produktionsverfahren von Dämmplatten im Doppelband-Verfahren oder von frei gestiegenen Blockschäumen vorstellbar, indem die gesamte Produktionsanlage mit einer Unterdruck-Kammer eingehaust wird. Die Konstruktion einer solchen Anlage kann sich an dem bei der Produktion von Weichschäumen unter vermindertem Druck gebräuchlichen "VPF-Verfahren" orientieren.

Als weiteres Beispiel soll die Herstellung eines Verbundmaterials mit geschäumter Polystyrol-Matrix näher diskutiert werden: in diesem Fall ist das bevorzugte Ausgangsmaterial für die Polymermatrix ein Granulat, vorzugsweise verkapseltes Granulat, aus Polystyrol mit eingearbeitetem Treibmittel. Dieses expandierbare Polystryol-Granulat wird mit dem einzubettenden Granulat bzw. den Formkörpern vermischt. Durch anschließendes Erhitzen der Granulat-Mischung, bevorzugt in einer Hohlform mit der gewünschten Geometrie, expandiert das Polystyrol zu einem Schaumstoff und verklebt gleichzeitig mit sich selbst und dem eingebetteten Granulat zu einem zusammenhängenden Formteil.

Die Menge an einzusetzenden Granulaten und einzusetzendem Polymeren bzw. deren Ausgangstoffen wird vorzugsweise so gewählt, dass der erhaltene Verbundwerkstoff die oben als bevorzugt angegebenen Masse an Granulaten und/oder das oben als bevorzugt angegebene Massenverhältnis aufweist.

Der erfindungsgemäße Verbundwerkstoff kann insbesondere als Isolations- und/oder Dämmmaterial verwendet werden. Bevorzugt wird dieses Isolations-/ Dämmmaterial zur Dämmung/Isolierung von Gebäuden, von Raum-, Luft-, See- und/oder Land-Fahrzeugen oder von Teilen von Kühl- oder Heiz-Anlagen, -Aggregaten verwendet. Die erfindungsgemäßen Verbundwerkstoffe können als Dämmstoff in Kühlgeräten und Warmwasserspeichern eingesetzt werden, und haben dabei den Vorteil, dass sie direkt im zu füllenden Hohlraum hergestellt werden können. Gleiches gilt für die Füllung von Profilen für Konstruktions-Zwecke, beispielsweise Fenster- oder Türrahmen, Rolladenelemente, Sektional-Tore usw. Des Weiteren können die erfindungsgemäßen Verbundwerkstoffe zur Isolation von Rohrleitungen (z.B. Nahund Fernwärmeleitungen) eingesetzt werden.

Entsprechende erfindungsgemäße Gegenstände zeichnen sich dadurch aus, dass sie einen erfindungsgemäßen Verbundwerkstoff aufweisen.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

**Beispiele:**

**Beispiel 1: Herstellung von Granulaten**

Aus 80 Gew.-% AEROSIL® 200 (Pyrogene Kieselsäure von der Firma Evonik Industries AG, BET-Oberfläche 200 m$^2$/g), 15 Gew.-% AROSPERSE 15 (Thermalruß von der Firma Orion Engineered Carbons) und 5 Gew.-% Glasfasern (Glasfaserschnitzel, ca. 12 mm Faserlänge) werden innig vermischt. Diese Mischung wird in Portionen zu je 0,6 g in ein zylindrisches Presswerkzeug mit 2 cm Durchmesser überführt und zu Tabletten von je 1 cm Höhe mithilfe einer hydraulischen Presse verpresst. Die Tabletten haben eine Dichte von ca. 200 kg/m$^3$.

**Beispiel 2: Verkapseln von evakuierten Granulaten**

Die in Beispiel 1 hergestellten Tabletten werden mit einer metallisierten Folie (Mehrschicht-Laminat von TOYO mit PET-Außenschicht, Aluminium-Barriere-Schicht und PE-Innenschicht) umhüllt, indem sie zwischen zwei Lagen dieser Folie gelegt werden und beide Lagen ringförmig um die Tabletten herum thermisch miteinander verschweißt werden. In der ringförmigen Schweißnaht bleibt eine kleine Lücke offen, an die über ein Rohr eine ölgedichtete Drehschieber-Vakuumpumpe angeschlossen wird. Mithilfe der Vakuumpumpe wird die Tablette für 10 min evakuiert und dann unter Vakuum die Öffnung in der Folie verschweißt, so dass die Tablette gasdicht abgeschlossen ist. Der überstehende Rand der Folie wird bis an die Schweißnaht heran abgeschnitten.

**Beispiel 3: Herstellung eines Kompositmaterials aus verkapselten Granulaten und geschäumter Polyurethan-Matrix**

Als Polymer-Matrix wurde eine Polyurethan-Hartschaumformulierung gemäß Tabelle 1 verwendet.

Tabelle 1: PUR-Formulierung

| Komponente | Gewichtsanteil |
|---|---|
| Daltolac R471* | 100 Teile |
| N,N-Dimethylcyclohexylamin | 1,5 Teile |
| Wasser | 2,6 Teile |
| cyclo-Pentan | 13,1 Teile |
| TEGOSTAB® B 8462 ** | 1,5 Teile |
| | |
| Desmodur 44V20L *** | 198,5 Teile |
| * Polyetherpolyol der Firma Huntsman<br>** Schaumstabilisator der Firma Evonik Industries AG<br>*** polymeres MDI der Firma Bayer, 200 mPa*s, 31,5 Gew.-% NCO, Funktionalität 2,7 | |

Die Durchführung der Polyurethan-Verschäumungen erfolgte im Handmischverfahren. Es wurden Polyol, Amin-Katalysator, Wasser, Schaumstabilisator und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3000 Upm verrührt und sofort in eine auf 45 °C thermostatisierte Aluminiumform von 50 cm x 25 cm x 5 cm Größe überführt, welche mit Polyethylenfolie ausgekleidet war. Die Einsatzmenge an Schaumformulierung war dabei so bemessen, dass sie 15% oberhalb der zur Mindestbefüllung der Form notwendigen Menge lag. Nach 10 min wurde die Schaumstoffplatte entformt. Von dieser Platte wurde mit einer Bandsäge eine 50 cm x 25 cm x 0,5 cm messende Scheibe abgesägt. Diese Scheibe wurde auf den Boden der wieder mit Polyethylenfolie ausgekleideten Aluminiumform gelegt und darauf die wie oben beschrieben hergestellten und unter Vakuum verkapselten Tabletten in drei Lagen, jeweils dicht an dicht angeordnet, ausgelegt. Analog zum ersten Verschäumungsvorgang wurde wieder Polyurethan-Reaktionsmischung angerührt, diese bei geöffnetem Formendeckel über die Tabletten gegossen und der Deckel sofort verschlossen. Nach weiteren 10 min Aushärtezeit wurde das fertige Kompositmaterial entformt.

Die erhaltene Platte des Kompositmaterials wurde mit einer Bandsäge auf 20 cm x 20 cm x 5 cm Größe zugeschnitten und die Wärmeleitfähigkeit dieses Probekörpers mit einem Wärmeleitfähigkeits-Meßgerät vom Typ Hesto HLC-A90 gemessen. Der Messwert betrug $15{,}8*10^{-3}$ W*m$^{-1}$*K$^{-1}$. Dieser Wert liegt deutlich unter dem von Polyurethan-Hartschaum. Zum Vergleich wurde eine Polyurethan-Hartschaumplatte, hergestellt mit gleicher Rezeptur ohne eingebettete Granulate, vermessen. Deren Wärmeleitfähigkeit betrug $22{,}5*10^{-3}$ W*m$^{-1}$*K$^{-1}$.

**Beispiel 4: Herstellung eines Kompositmaterials durch Einschäumen von unverkapselten Granulaten mit Polyurethan-Hartschaum im Unterdruck**

Als Polymer-Matrix wurde eine Polyurethan-Hartschaumformulierung gemäß Tabelle 2 verwendet.

Tabelle 2: PUR-Formulierung 2

| Komponente | Gewichtsanteil |
|---|---|
| Daltolac R 471* | 100 Teile |
| N,N-Dimethylaminoethoxyethanol | 0,5 Teile |
| Triethylendiamin, 33%ig in Dipropylenglycol | 0,5 Teile |
| Wasser | 0,5 Teile |
| TEGOSTAB® B 8462 ** | 2,0 Teile |
| | |
| Desmodur 44V20L *** | 189,2 Teile |
| * Polyetherpolyol der Firma Huntsman<br>** Schaumstabilisator der Firma Evonik<br>*** polymeres MDI der Firma Bayer, 200 mPa*s, 31,5 Gew.-% NCO, Funktionalität 2,7 | |

Die Durchführung der Polyurethan-Verschäumungen erfolgte mit einer Hochdruck-Verschäumungsmaschine vom Typ KraussMaffei RIM-Star MiniDos mit MK12/18ULP-2KVV-G-80-I Mischkopf. Es wurden Polyol, Katalysatoren, Wasser und Schaumstabilisator abgewogen, gründlich gemischt und die Mischung in den Arbeitsbehälter der Maschine überführt. Die Rohstoffe - Polyolgemisch und Isocyanat - wurden auf 35 °C temperiert, die Drücke betrugen 130 bar beim Polyol und 140 bar beim Isocyanat und die Gesamtaustragsleistung war 200 g/s. Eine auf 45 °C thermostatisierte Aluminiumform von 50 cm x 25 cm x 5 cm Größe, ausgerüstet mit gasdicht schließendem Deckel mit mittigem Einschussloch und einem seitlichen Anschluss für eine Vakuumpumpe (mit einem Sieb gegen eindringenden Schaum geschützt), wurde mit Polyethylenfolie ausgekleidet, verschlossen, der Mischkopf gasdicht in das Einschussloch gesetzt und die Hohlform mit einer Membran-Vakuumpumpe mit Vakuum-Controller auf 200 mbar evakuiert. In die Form wurde mittels der Verschäumungsanlage Polyurethan-Reaktionsmischung injiziert, deren Menge so bemessen war, dass sie 15% oberhalb der zur Mindestbefüllung der Form notwendigen Menge lag. Nach 10 min wurde die Schaumstoffplatte entformt. Von dieser Platte wurden mit einer Bandsäge zwei 50 cm x 25 cm x 0,5 cm messende Scheiben abgesägt. Eine Scheibe wurde auf den Boden der wieder mit Polyethylenfolie ausgekleideten Aluminiumform gelegt und darauf die wie oben beschrieben hergestellten unverkapselten Tabletten in drei Lagen, jeweils dicht an dicht angeordnet, ausgelegt. Die zweite Platte wurde mit doppelseitigem Klebeband an dem Formendeckel befestigt und das Einschussloch ausgeschnitten. Die Form wurde verschlossen, in 3 Zyklen für jeweils 10 min evakuiert und mit Kohlendioxid belüftet. Danach wurde wieder auf 200 mbar evakuiert und nach 10 min analog zum ersten Verschäumungsvorgang Polyurethan-Reaktionsmischung injiziert. Nach weiteren 10 min Aushärtezeit wurde das fertige Kompositmaterial entformt.

Die erhaltene Platte des Kompositmaterials wurde mit einer Bandsäge auf 20 cm x 20 cm x 5 cm Größe zugeschnitten und die Wärmeleitfähigkeit dieses Probekörpers mit einem Wärmeleitfähigkeits-Meßgerät vom Typ Hesto HLC-A90 gemessen. Der Messwert betrug $17,9*10^{-3}$ W*m$^{-1}$*K$^{-1}$.

**Patentansprüche**

1.  Verbundwerkstoff umfassend eine Polymermatrix enthaltend ein oder mehrere Polymere und eingebettet in die Polymermatrix Granulate, die mindestens einen gegenüber der Umgebung abgeschlossenen Hohlraum aufweisen, in dem ein Unterdruck gegenüber dem Normaldruck von 1 bar (100 kPa) vorliegt.

2.  Verbundwerkstoff gemäß Anspruch 1, **dadurch gekennzeichnet, dass** der Unterdruck von kleiner 500 mbar, vorzugsweise von 0,001 bis 200 mbar beträgt.

3.  Verbundwerkstoff gemäß Anspruch 1 oder 2, **dadurch gekennzeichnet, dass** der Hohlraum durch eine Barriere aus einer glasartigen Verbindung oder einem Kunststoff-Metall-Verbund gegenüber der Umgebung abgeschlossen ist.

4.  Verbundwerkstoff gemäß zumindest einem der Ansprüche 1 bis 3, **dadurch gekennzeichnet, dass** die Polymermatrix eine geschlossenzellige Polymerschaummatrix ist.

5. Verbundwerkstoff gemäß Anspruch 4, **dadurch gekennzeichnet, dass** die Polymerschaummatrix ein Polyurethan- oder Polyisocyanurat-Hartschaum ist.

6. Verbundwerkstoff gemäß zumindest einem der Ansprüche 1 bis 5, **dadurch gekennzeichnet, dass** die Granulate im Wesentlichen aus Materialien mit einer BET-Oberfläche von größer 5 $m^2$/g, besonders bevorzugt von 50 $m^2$/g bis 1000 $m^2$/g (nach ISO 9277), hergestellt werden.

7. Verbundwerkstoff gemäß zumindest einem der Ansprüche 1 bis 6, **dadurch gekennzeichnet, dass** die Granulate im Wesentlichen aus kompaktierten Pulvern aus pyrogener Kieselsäure oder Fällungskieselsäure bestehen.

8. Verfahren zur Herstellung eines Verbundwerkstoffs gemäß zumindest einem der Ansprüche 1 bis 7, **dadurch gekennzeichnet, dass** ein Material zur Herstellung einer Polymermatrix mit Granulaten vermischt wird, die mindestens einen gegenüber der Umgebung abgeschlossenen Hohlraum aufweisen, in dem ein Unterdruck gegenüber dem Normaldruck von 1 bar (100 kPa) vorliegt, und aus dieser Mischung eine Polymermatrix erzeugt wird, in welcher die Granulate eingebettet sind.

9. Verfahren nach Anspruch 8, **dadurch gekennzeichnet, dass** die eingesetzten Granulate erzeugt werden in dem offenporige poröse Granulate einem Unterdruck ausgesetzt werden und mit einer luft- oder gasundurchlässigen Barriereschicht ausgerüstet werden.

10. Verfahren zur Herstellung eines Verbundwerkstoffs gemäß zumindest einem der Ansprüche 1 bis 7, **dadurch gekennzeichnet, dass** unverkapselte offenporig poröse Granulate einem Unterdruck ausgesetzt werden und unter diesen Bedingungen in eine Polymermatrix eingebettet werden, so dass die Polymermatrix die eingebetteten Granulate gasdicht umhüllt und der Unterdruck in den Hohlräumen der Granulate bestehen bleibt, wenn der Verbundwerkstoff dem normalen Luftdruck ausgesetzt wird.

11. Verfahren gemäß zumindest einem der Ansprüche 8 bis 10, **dadurch gekennzeichnet, dass** das Material zur Herstellung einer Polymermatrix ein Polymer oder eine Mischung von Polymeren ist oder die Edukte zur Erzeugung des/der Polymeren sind.

12. Verfahren gemäß zumindest einem der Ansprüche 8 bis 11, **dadurch gekennzeichnet, dass** ein Verfahrensschritt der Verschäumung enthalten ist.

13. Verwendung eines Verbundwerkstoffs gemäß einem der Ansprüche 1 bis 7, als Isolations- und/oder Dämmmaterial.

14. Verwendung nach Anspruch 13, **dadurch gekennzeichnet, dass** das Isolations-/Dämmmaterial zur Dämmung/ Isolierung von Gebäuden einschließlich Fenstern, Türen und Rollladenkästen, von Raum-, Luft-, See- und/oder Land-Fahrzeugen, von Rohrleitungen, oder von Teilen von Kühl- oder Heiz-Anlagen, -Aggregaten, Kühlgeräte, Warmwasser-/Kältemittelspeicher, Schwimmbadabdeckungen und - isolationen verwendet wird.

15. Gegenstand, **dadurch gekennzeichnet, dass** er einen Verbundwerkstoff gemäß einem der Ansprüche 1 bis 7 aufweist.

# EP 2 573 131 A1

**EUROPÄISCHER RECHERCHENBERICHT**

**Nummer der Anmeldung**

EP 12 18 0985

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 939 151 A1 (SIEBRECHT RALF [DE]) 2. Juli 2008 (2008-07-02) * Absätze [0034], [0037], [0066], [0074]; Ansprüche 1-3, 7, 11-14; Abbildung 3 * ----- | 1 | INV. C08J9/00 C08K7/22 C08K7/26 C08K9/10 F16L59/065 B01J3/00 B29C44/34 |
| X | US 5 084 320 A (BARITO ROBERT W [US] ET AL) 28. Januar 1992 (1992-01-28) * Spalte 7, Zeilen 37-50; Ansprüche 1-13; Beispiel 1 * ----- | 1 | |
| X | DE 10 2004 031967 A1 (WACKER CHEMIE GMBH [DE]) 19. Januar 2006 (2006-01-19) * Absatz [0032]; Ansprüche 1-9; Beispiel 1 * ----- | 1 | |
| A | US 6 166 109 A (SPITLER KIETH G [US] ET AL) 26. Dezember 2000 (2000-12-26) * Spalte 6, Zeilen 8-12; Ansprüche 1-11 * ----- | 1-15 | |
| | | | **RECHERCHIERTE SACHGEBIETE (IPC)** C08J C08K F16L B01J B29C |

Der vorliegende Recherchenbericht wurde für alle Patentansprüche erstellt

| Recherchenort | Abschlußdatum der Recherche | Prüfer |
|---|---|---|
| München | 10. Januar 2013 | Clement, Silvia |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 12 18 0985

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-01-2013

| Im Recherchenbericht angeführtes Patentdokument | Datum der Veröffentlichung | Mitglied(er) der Patentfamilie | Datum der Veröffentlichung |
|---|---|---|---|
| EP 1939151 A1 | 02-07-2008 | DE 102006061666 A1<br>EP 1939151 A1 | 03-07-2008<br>02-07-2008 |
| US 5084320 A | 28-01-1992 | KEINE | |
| DE 102004031967 A1 | 19-01-2006 | KEINE | |
| US 6166109 A | 26-12-2000 | AT 300579 T<br>CA 2239950 A1<br>CN 1223927 A<br>DE 69830955 D1<br>DE 69830955 T2<br>DK 0896976 T3<br>EP 0896976 A1<br>ES 2245798 T3<br>HK 1021519 A1<br>JP 11140219 A<br>TW 408151 B<br>US 6166109 A | 15-08-2005<br>11-02-1999<br>28-07-1999<br>01-09-2005<br>20-04-2006<br>10-10-2005<br>17-02-1999<br>16-01-2006<br>04-04-2003<br>25-05-1999<br>11-10-2000<br>26-12-2000 |

EPO FORM P0461

Für nähere Einzelheiten zu diesem Anhang : siehe Amtsblatt des Europäischen Patentamts, Nr.12/82